# EUROPEAN PATENT APPLICATION

(11) **EP 0 698 723 A2**
(43) Date of publication of application: **28.02.1996**
(21) Application number: 95304883.2
(22) Date of filing: 13.07.1995
(51) Int. Cl.: F01D 5/18

(54) **Turbine stator vane segment having closed cooling circuit**

(30) Priority: 23.08.1994 US 294671
(71) Applicant: GENERAL ELECTRIC COMPANY, Schenectady, NY 12345 (US)
(72) Inventor: Cunha, Francisco Jose, Schenectady, New York 12301 (US); DeAngelis, David A., Voorheesville, New York 12186 (US)
(74) Representative: Pratt, Richard Wilson

(57) **Abstract**

A second stage stator vane segment includes outer and inner walls integrally cast with a pair of vanes and hooks for locating the segments on the inner shell of a turbine. Each of the outer and inner walls is divided into compartments which are in turn divided into inner and outer chambers by impingement plates. Cooling steam inlet to the outer side wall flows into the outer chambers and through the openings of the impingement plate for steaming cooling the outer side wall. Steam flows through cavities in the vane for impingement steam cooling the vane and into compartments of the inner side wall. Impingement plates in the inner side wall direct the steam for impingement cooling of the inner side wall and return through a cavity in the vane for further impingement-cooling of the vane and flow to a steam exhaust. The trailing edge of the vane is air cooled.

## Description

### TECHNICAL FIELD

The present invention relates to a stator vane segment for use as part of a stage of a turbine, and particularly relates to a stator vane segment having integrally cast side walls and vanes for use under high thermal fluxes and high internal pressures, as well as a closed cooling circuit.

### BACKGROUND

The traditional approach for cooling turbine blades and nozzles is to extract high pressure cooling air from a source, for example, by extracting air from the intermediate and last stages of the turbine compressor. A series of internal flow passages are typically used to achieve the desired mass flow objectives for cooling the turbine blades. In contrast, external piping is used to supply air to the nozzles with air film cooling typically being used. However, the diverted coolant air does not receive energy directly from the combustors of the turbine and represents a parasitic loss to turbine output and degrades overall performance.

In advanced gas turbine designs, it has been recognized that the temperature of the hot gas flowing past the turbine components could be higher than the melting temperature of the metal. It is therefore necessary to establish a cooling scheme to protect the hot gas path components during operation. In combined-cycle plants, steam may be the preferred cooling media. See, for example, U.S. Patent No. 5,253,976 of common assignee herewith. Because steam has a higher heat capacity than the combustion gas, it is inefficient to allow the coolant steam to mix with the hot gas stream. Consequently, it is desirable to maintain cooling steam inside the hot gas path components in a closed circuit. A complication arises, however, that the coolant supply pressure level is usually much higher than that of the hot gas stream. Thin walls, desirable for cooling purposes, may not be sufficient to withstand the pressure difference without incurring excessive mechanical stresses. That is, the necessary thickness to maintain structural integrity would drastically increase the magnitude of the required cooling flow. Thus, it has been found desirable to provide stator vane segments which can be cooled while operating under high thermal fluxes and high pressures.

### DISCLOSURE OF THE INVENTION

In accordance with the present invention, there are provided stator vane segments having the necessary structural integrity under high thermal fluxes and pressures, while simultaneously affording inner and outer walls capable of being cooled by a cooling medium, preferably steam, flowing in a closed circuit. Particularly, the present invention provides a plurality of stator vane segments each of which comprise one or more stator vanes extending between outer and inner side walls. The vanes have a plurality of cavities in communication with compartments in the outer and inner side walls for flowing a cooling media, preferably steam, in a closed-circuit path for cooling the outer and inner walls and the vanes. To provide structural integrity for the segment, the outer and inner side walls, the vanes, and one or more hooks on the outer side wall are integrally formed, preferably by casting, to provide the structural strength necessary to support the plural stator vane segments as part of the stage of the turbine. These hooks, which form the connection between the inner shell of the turbine and provide the support for the stator vane segments, are integrally and structurally connected with the vanes and spaced outwardly of the outer side wall, enabling reduced material thicknesses for the walls *per se*.

More particularly, in a preferred embodiment, the outer side wall has a plurality of ribs extending along an outer surface of the wall defining a plurality of compartments outwardly of the outer surface. The ribs are undercut or provided with openings for communicating a cooling media, e.g., steam, from an inlet to the segment into the compartments. Impingement plates are disposed in each compartment defining inner and outer chambers. The cooling media is inlet to the outer chambers through the undercuts or openings in the ribs for flow through a plurality of openings in the impingement plates for impingement cooling flow against the outer surface of the outer side wall. Additionally, the compartments lie in communication with one or more of cavities extending internally within the vanes for flowing the cooling medium into the vanes. The inner side wall is similarly compartmentalized by at least one rib and also includes impingement plates in the compartments defining inner and outer chambers. The cavities of the vane have outlets in communication with the inner chambers of the inner side wall whereby cooling medium flows through the openings of impingement plates into the outer chamber of the inner compartments for impingement cooling of the inner side wall. The vanes include exit openings in communication with the outer chambers of the inner side wall for flowing the cooling media through a return cavity within the vanes for flow through an exhaust port outwardly of the outer side wall.

Impingement cooling of the vanes is also provided. To accomplish this, inserts are provided the majority of the cavities of the vane. For example, an insert is provided the cavity adjacent the leading edge of the vane and includes a sleeve having at its outer end openings in communication with the inner chambers of the compartments and the outer side wall for flowing cooling medium into the insert sleeve. The interior walls of the cavities have a plurality of inwardly projecting ribs at spaced locations lengthwise therealong. In each such cavity, these ribs define with the insert sleeve a plurality of spaced gaps between the insert and the interior wall. The insert sleeve has a plurality of openings for flowing cooling medium from within the insert sleeve through the openings for impingement cooling against the inner surface of the vane in each gap. The cooling medium flows to a return channel formed between a portion of the insert sleeve and an interior wall of the cavity for flow into the inner chambers of the inner side wall. The outer chambers of the inner side wall have openings communicating the cooling medium into a second or return cavity within the vane. The return cavity similarly has an insert sleeve with openings for flowing the returning cooling medium through the openings for impingement cooling of the return cavity. It will be appreciated that the return cavity likewise has ribs projecting from its inner wall surface, defining gaps whereby the cooling medium flows into the gaps and into a return channel between the insert and the cavity wall. The returning cooling medium is returned to a plenum outside of the outer side wall for exhaust.

Additionally, an air circuit is provided for cooling one of the cavities, preferably the last cavity adjacent the trailing edge of the vane. For this purpose, air is inlet through suitable inlet ports in the outer side wall for cooling flow through the trailing edge cavity and directly into a plenum inwardly of the inner side wall. A plurality of openings are provided through the forward and aft surfaces of the diaphragm whereby the cooling air flows into the wheel cavities of the turbine for cooling purposes and also to prevent leakage of hot gases of combustion into the wheel space.

In a preferred embodiment according to the present invention, there is provided a stator vane segment for forming part of a stage of a turbine and connection with an inner shell of the turbine, comprising inner and outer walls spaced from one another, a stator vane extending between the inner and outer walls and having leading and trailing edges, the vane including a plurality of discrete cavities between the leading and trailing edges and extending lengthwise of the vane for flowing a cooling medium and a hook connected to the vane and projecting outwardly of the outer wall for supporting the stator vane from the inner turbine shell, the inner and outer walls, the vane and the hook being formed of an integral casting.

In a further preferred embodiment according to the present invention, there is provided a stator vane segment for forming part of a stage of a turbine and connection with an inner shell of the turbine, comprising inner and outer walls spaced from one another, a stator vane extending between the inner and outer walls and having leading and trailing edges, the vane including a plurality of discrete cavities between the leading and trailing edges and extending lengthwise of the vane for flowing a cooling medium, the outer wall having a plurality of ribs along an outer surface thereof defining a plurality of compartments outwardly of the outer surface for receiving the cooling medium and forming structural connections with the vane, a cover for each compartment, impingement plates in the compartments between the covers and the outer surface defining outer and inner chambers on opposite sides of the impingement plates and in the compartments, a cooling medium inlet for the segment, the ribs having openings for enabling passage of the cooling medium from the inlet into the outer chambers of the compartments, the impingement plates having openings enabling passage of the cooling medium from the outer chambers into the inner chambers for impingement cooling of the outer wall. The vane has a first opening through a side wall thereof in communication with at least one compartment of the outer wall and one of the cavities to enable passage of the cooling medium between the one compartment and one cavity.

In a still further preferred embodiment according to the present invention, there is provided a stator vane segment for forming part of a stage of a turbine and connection with an inner shell of the turbine, comprising inner and outer walls spaced from one another, a stator vane extending between the inner and outer walls and having leading and trailing edges, the vane including a plurality of discrete cavities between the leading and trailing edges and extending lengthwise of the vane for flowing a cooling medium, the inner wall having a plurality of ribs along an inner surface thereof defining a plurality of compartments inwardly of the inner surface for receiving the cooling medium and forming structural connections with the vane, a cover for one of the compartments, an impingement plate in one compartment between the cover and the inner surface defining inner and outer chambers on opposite sides of the impingement plate and in the one compartment, the vane having an opening through a side wall thereof in communication with the inner chamber and one of the cavities for flowing the cooling medium between the one cavity and the inner chamber, the impingement plate having openings enabling passage of the cooling medium from the inner chamber into the outer chamber for impingement cooling of the inner wall.

In a still further preferred embodiment according to the present invention, there is provided a stator vane segment for forming part of a stage of a turbine and connection with an inner shell of the turbine, comprising inner and outer walls spaced from one another, a stator vane extending between the inner and outer walls and having leading and trailing edges, the vane including a plurality of discrete cavities between the leading and trailing edges and extending lengthwise of the vane for flowing a cooling medium, at least one cavity of the vane having a plurality of ribs projecting inwardly of an inner wall surface of the vane at spaced locations along the length of the vane, an insert sleeve within the one cavity and engaging the ribs defining discrete gaps between the insert sleeve and the inner wall of the vane at spaced locations along the vane, an inlet to the insert sleeve for flowing the cooling medium into the insert sleeve, the insert sleeve having a plurality of openings therethrough for flowing the cooling medium through the sleeve openings into the gaps for impingement against an inner wall surface of the vane, the insert and the inner wall surface of the vane defining a channel therebetween and along a side wall of the vane in communication with the gaps for receiving the cooling medium flowing into the gaps.

Accordingly, it is a primary object of the present invention to provide a novel and improved stator vane segment having a closed cooling circuit.

### BRIEF DESCRIPTION OF THE DRAWINGS

FIGURE 1 is a fragmentary side elevational view of a portion of a gas turbine illustrating first and second stage turbine buckets and first and second stage stator vanes;
FIGURE 2 is a perspective view of a second stage stator vane segment as viewed from its inlet side;
FIGURE 3 is a fragmentary perspective view of an outer side wall for the turbine segment illustrated in Figure 2 with the covers removed illustrating the cooling flow compartments in the outer side wall and the communication of the cooling flow with the vane;
FIGURE 4 is a fragmentary enlarged perspective view with portions broken out and in cross section illustrating the forward portion of a stator vane segment including a hook in the outer wall;
FIGURE 5 is a fragmentary perspective view with parts broken out and in cross section illustrating the inner side wall with a diaphragm;
FIGURE 5A is a schematic view through the stator vane illustrating the cooling flow paths through the inner side wall;
FIGURE 6 is an enlarged cross sectional view through a vane and the outer side wall illustrating the flow of the cooling medium within the vane;
FIGURE 7 is an enlarged cross-sectional view of the vane;
FIGURE 8 is a fragmentary perspective view with parts broken out and in cross section of the inner side wall and diaphragm adjacent the trailing edge of the vane;

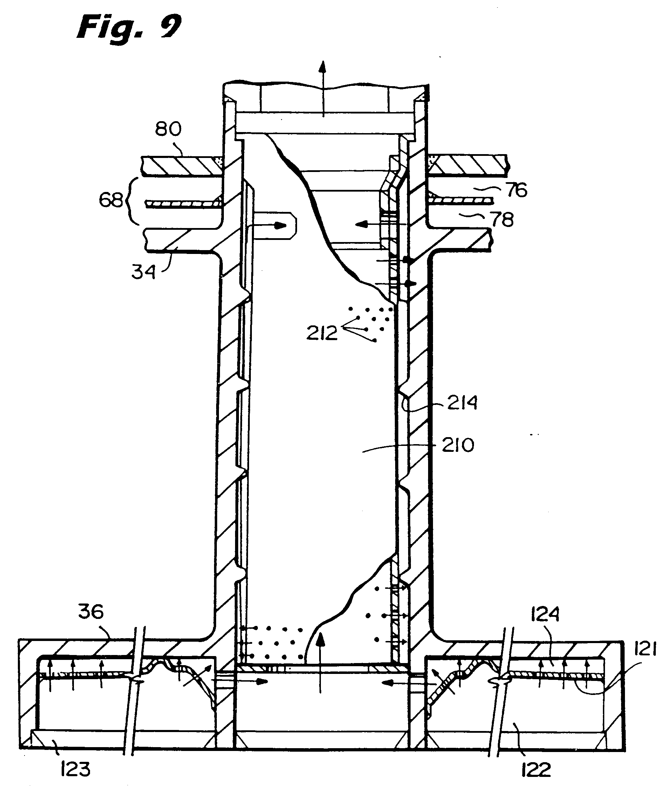

FIGURE 9 is a fragmentary cross sectional view of the vane with portions in elevation illustrating the return flow of the cooling medium from the inner side wall through the vane; and
FIGURE 10 is a cross sectional view thereof taken generally about on line 10-10 in Figure 7.

### BEST MODE FOR CARRYING OUT THE INVENTION

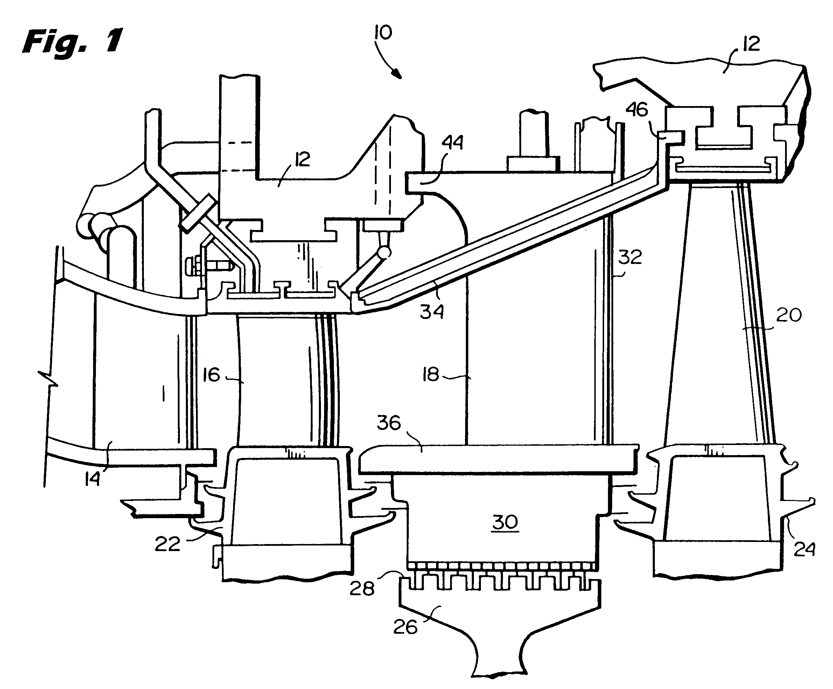

Referring now to Figure 1, there is illustrated a portion of a gas turbine generally designated 10 having an inner shell 12 surrounding the various stages of the turbine. For example, turbine 10 includes a first stage nozzle 14, a first stage of turbine buckets 16, a second stage nozzle 18 and a second stage of turbine buckets 20. It will be appreciated that the buckets 16 and 20 respectively are mounted on pedestals 22 and 24 which in turn are mounted on turbine wheels, not shown, for rotation about the turbine axis. Spacers 26 are disposed axially between and secured to the wheels of the turbine for rotation therewith and include a sealing surface 28 for sealing against the interface of a fixed diaphragm 30. The second stage nozzle 18 includes a plurality of radially extending vanes 32 circumferentially spaced one from the other and extending generally radially inwardly from an outer side wall 34 to an inner side wall 36 to which the diaphragm 30 is secured. It will be appreciated that hot gases of combustion from the turbine combustors, not shown, flow generally axially, for example, from left to right in Figure 1 through the first stage nozzles 14 for driving the first stage of turbine buckets 16 and which gas then flows through the fixed second stage 18 for driving the second stage of turbine buckets 20.

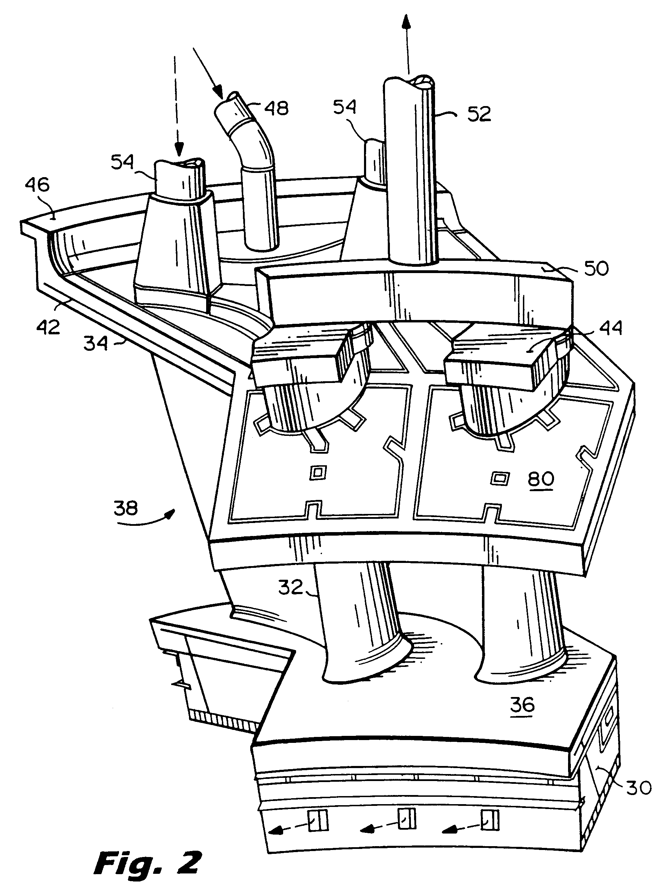

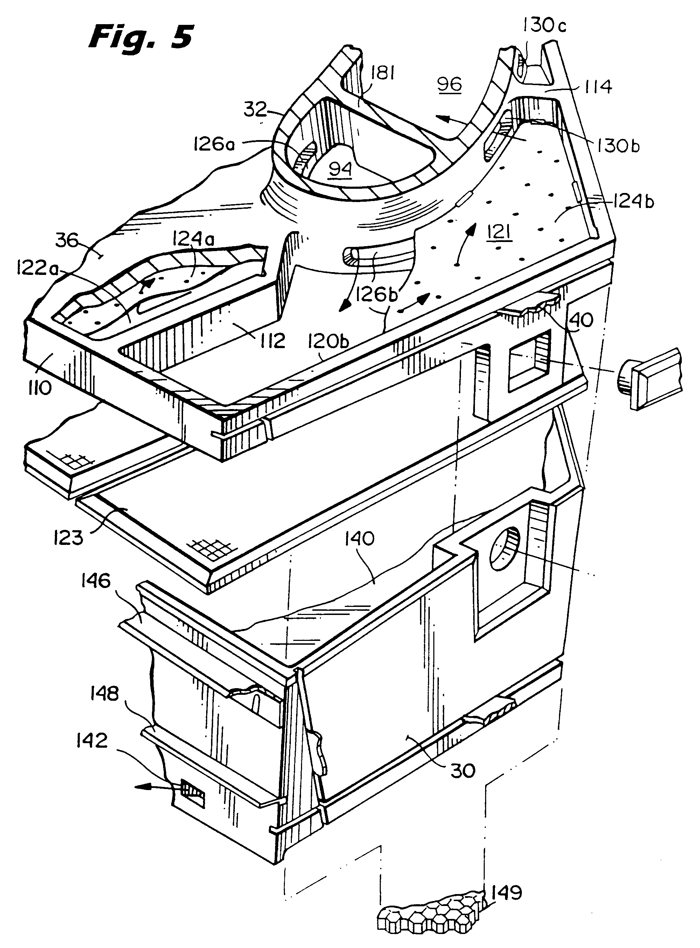

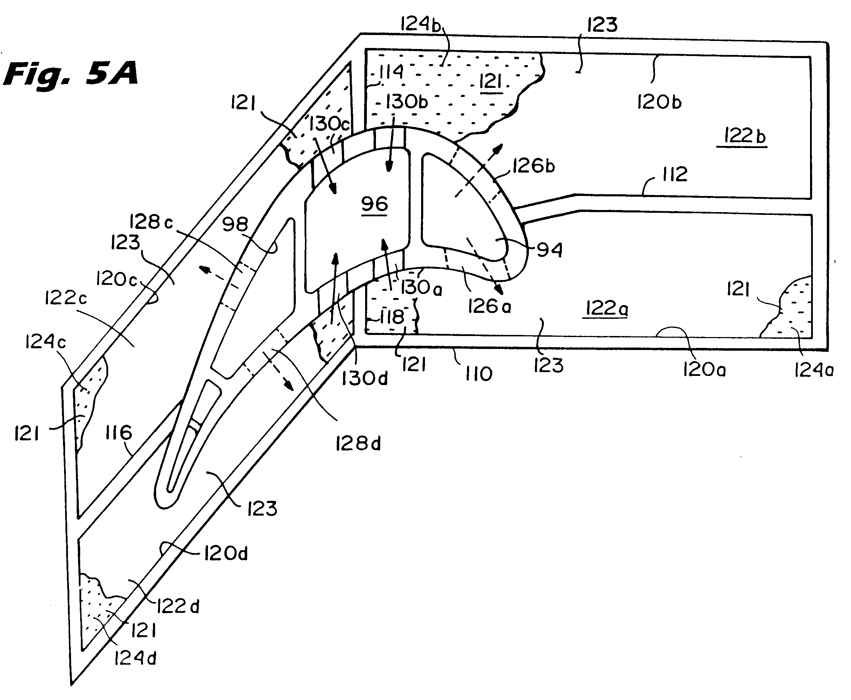

Referring now to Figure 2, there is illustrated a second stage stator vane segment generally designated 38, each segment including outer and inner side walls 34 and 36 respectively with one or more stator vanes 32 extending between the outer and inner side walls. It will be appreciated that the segments 38 are spaced circumferentially one from the other about the inner shell of the turbine and are supported from the inner shell. The adjoining segments are sealed one to the other by leaf type seals 40 (Figure 5) situated in grooves 42 formed along the side edges of each of the outer and inner side walls 34 and 36 respectively. Thus, the outer and inner side walls as well as the vanes and diaphragms are wholly supported by the inner shell of the turbine. To provide such support, one or more supporting hooks 44 are integrally cast with a corresponding vane in each segment as well as integrally cast with the outer and inner side walls 34 and 36 respectively to provide the necessary structural support. An aft supporting hook 46 is formed on the aft side of the outer side wall 34. These supporting hooks 44 and 46 are structurally interconnected with the inner shell 12 as illustrated in Figure 1.

Still referring to Figure 2, and to provide the cooling circuit for the second stage stator vane segment, there is provided a cooling medium inlet port 48 for supplying cooling medium, preferably steam, to the outer and inner side walls and the vanes of the segment. A return cooling medium plenum 50 is disposed adjacent the upper ends of the vanes 32 for receiving the spent cooling medium for exhaust through a discharge 52. A pair of air inlets 54 are also disclosed for flowing air into the vanes along the trailing edges thereof for exiting into the diaphragm 30 and into the wheel cavities as described hereinafter.

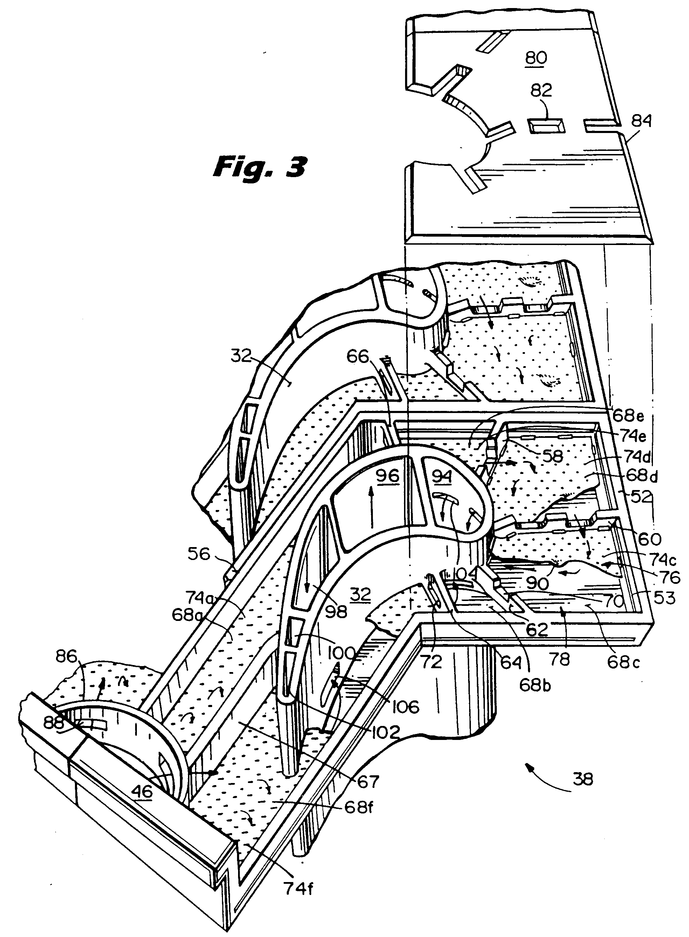

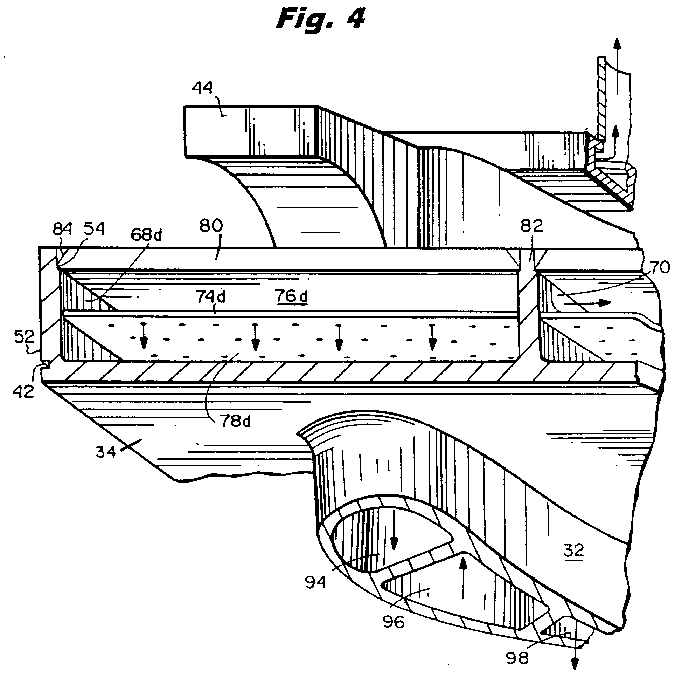

It will be appreciated that in the present description, each segment preferably comprises a pair of vanes between outer and inner side walls 34 and 36 respectively although it will be appreciated that a fewer or greater number of vanes can be employed in each segment as desired. Referring to Figures 3 and 4, each segment 38 includes outer railings 52 projecting outwardly along the outer margins of outer side wall 34. (The terms outwardly and inwardly or outer and inner refer to a generally radial direction.) Thus, the railings 52 define the marginal edges of the segment 38 with the exception that the aft hook 46 forms the outer margin along the aft side of the segment. Each railing 52 has an inner platform or flange 53. A mid-segment rib 56 extends from the leading railing 52 to the aft hook 46 and between the vanes 32 which project through the outer side wall 34. Additionally, internal railings 58, 60, 62, 64, 66 and 67 are integrally cast with the vanes and the inner and outer side walls as well as the hooks. The internal railings 58, 62, 64 and 66 extend from the side railing and mid-rib for connection with the outer ends of the vanes while the railing 60 extends from the outer railing 52 to the vane and railing 67 extends from arcuate wall 86 to the vane. As illustrated, it will be appreciated that these railings divide the back side of the outer wall 34 into a plurality of compartments 68a-68f, for example, the compartment 68c defined between internal railings 60 and 62 and outer railing 52. Each of the internal railings is either undercut, for example, at 70 or provided with an opening therethrough, for example, at 72 whereby the various compartments defined by the internal railings lie in communication one with the other.

Each compartment 68a-68f is provided with a perforated impingement plate 74a-74f, respectively, which divides the compartment into outer and inner chambers 76, 78, for example, the outer and inner chambers 76d and 78d separated by impingement plate 74d as illustrated in Figure 4. A plurality of cover plates are provided for the compartments 68. Each cover plate 80 is provided with openings or slots 82 for receiving correspondingly located portions of the internal railings to locate the cover in overlying position relative to the compartments and to the flange 53. The covers 80 are beveled along their edges 84 to permit TIG welding onto the segment. Thus, to the extent so far described, it will be appreciated that a cooling medium, preferably steam, provided to each segment through inlet 48 flows into a plenum defined by the aft hook 46 and an arcuate wall 86 (Figure 3) for flow through openings 88 into the outer chambers 76 of compartments 68. It will also be appreciated that the cooling medium flows into the outer chambers 76 through the undercuts or openings in the internal railings and then passes through perforations in the impingement plates 74 into inner chambers 78 of compartments 68 for impingement cooling of the outer wall 34 as illustrated in Figure 4. It will be appreciated that the impingement plates may have inwardly projecting dimples 90 to space the impingement plates 74 from the outer wall 34 to define the inner chambers. Also from a review of Figure 3, it will be appreciated that each vane 32 has a plurality of internal cavities, preferably five cavities 94, 96, 98, 100 and 102. As described hereinafter, steam is supplied through the forward and intermediate cavities 94 and 98 to the inner side wall 36 and returns to the outer side wall through an intermediate cavity 96. To supply the steam to the leading and intermediate cavities 94 and 98, openings 104 and (Figure 3) 106 lie in communication with adjacent inner chambers 78 of the compartments.

Referring now to Figures 5 and 5A, there is illustrated a portion of the inner side wall 36 and vane 32, it being appreciated that a pair of vanes 32 are connected to the inner side wall 36 of the segment 38. As illustrated, the inner side wall 36 has a plurality of inwardly directed side railings 110 as well as interior railings 112, 114, 116 and 118 defining along the inner side wall a plurality of compartments 120a, 120b, 120c and 120d. The compartments are also defined in part by inner covers 123 secured, preferably by welding, to the side and interior railings of the inner side wall 36. Impingement plates 121 are disposed in each compartment dividing the compartments into inner chambers 122a, 122b, 122c and 122d and outer chambers 124a, 124b, 124c and 124d. As illustrated in Figure 5A, each of the cavities 94 and 98 has a pair of openings 126a, 126b and 128c, 128d, respectively, for flowing the cooling medium into the inner chambers 122a, 122b and 122c, 122d, respectively, of the inner compartments 120 of the inner side wall 36. It will be appreciated that the flow of cooling medium into the inner chambers 122 enables the flow to pass generally radially outwardly through the perforations in the impingement plates 121 into the outer chambers 124a, 124b, 124c and 124d for impingement cooling of the inner side wall 36. As illustrated in Figures 5 and 5A, the outer chambers 124a, 124b, 124c and 124d communicate with the return cavity 96 of vane 32 by way of openings 130a, 130b, 130c and 130d, respectively. Return cavity 96 communicates with the plenum 50 (Figure 2) for exhausting the spent cooling medium through the discharge 52.

As indicated previously, cooling air passes through inlets 54 directly into the aft cavities 100 and 102 of each vane 32. The cavities 100 and 102 exhaust the cooling air through the inner side wall 36 and the covers 123 into the diaphragm 30. The covers 123, the side walls and inner wall 140 of the diaphragm 30 define a plenum 141. Adjacent each of the forward and aft sides of the plenum are apertures 142 and 144 respectively for flowing the extraction air into the wheel spaces on axially opposite sides of the diaphragm. It is also possible to use pipe connections with nozzles between exhausts of cavities 100 and 102 to accelerate air flow toward apertures 142 and 144. The openings are formed such that they provide a tangential air flow into the wheel space cavities. Seals 146 and 148 are formed along the forward and aft sides of the diaphragm for sealing with the adjacent angel wings of the turbine wheels. The pumping action of the turbine rotor forces the air flow to proceed around the seals 146 and 148. Because there is a substantial pressure difference between the forward and aft sides of the diaphragms, a portion of the cooling air will flow below the diaphragm between it and the spacers 26. To reduce leakage, a metallic honeycomb 149 is provided along the inner side of diaphragm 30. The honeycomb seals are brazed directly onto the bottom of the diaphragm. The spacer which rotates has a plurality of labyrinthine knife edges for extending into the honeycomb seal for reducing the air leakage.

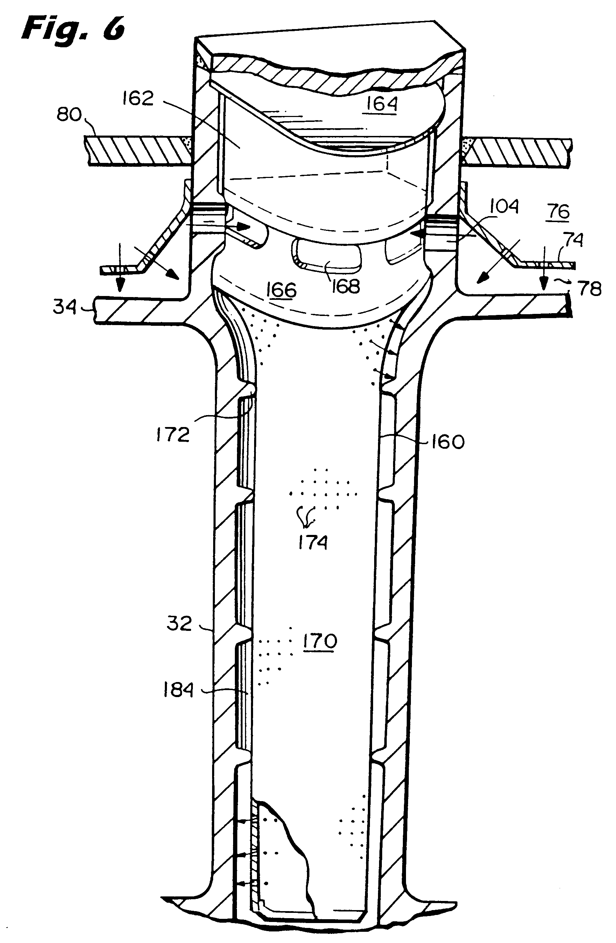

Referring now to Figure 6, there is illustrated the leading edge of the vane 32. The leading edge cavity 94 is provided with an insert 160 and which insert 160 is provided in three different sections to facilitate manufacture. An outer section 162 is used to locate and position the insert 160 within the vane. The outer section 162 includes a collar 164 which is secured, for example, by brazing to an intermediate section 166. Collar 164 rests on a flange formed in the upper end of the vane. Intermediate section 166 includes a plurality of openings 168 which lie in communication with the openings 104 of the inner chambers of the compartments 68b-68f. Thus, post-impingement cooling medium from the inner chamber 78 of outer side wall 34 passes through openings 104 and openings 168 of the insert 160 for flow inwardly through the lower section 170. Note also that the intermediate section 166 is secured to the vane 32 inwardly of the openings 104 such that flow of the cooling medium from the inner chambers through openings 104 must pass through openings 168 and cannot pass between intermediate section 166 and the inner wall of the vane. Preferably the intermediate section 166 may be brazed to the inner wall of the vane.

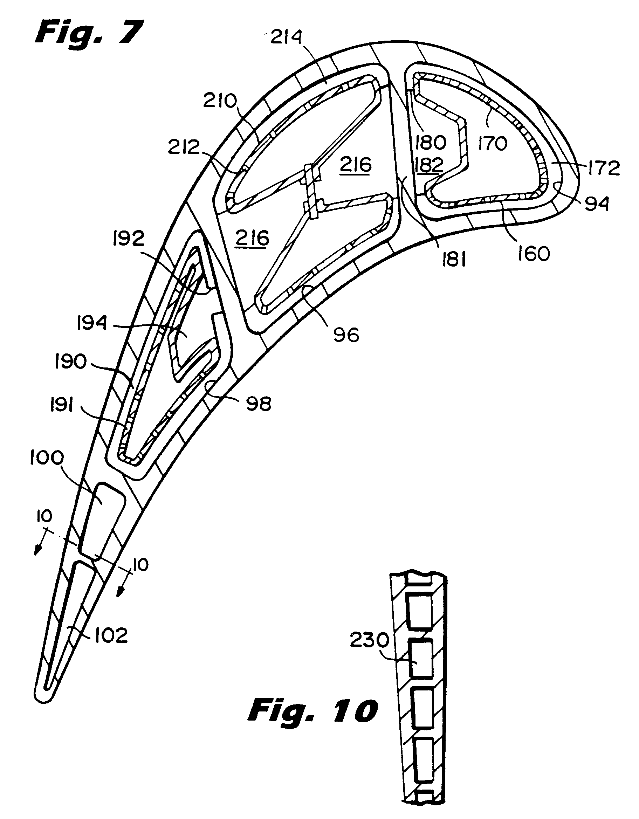

Within the vane, there is provided at radially spaced locations along the vane a plurality of inwardly directed projections or ribs 172 for spacing the lower section 170 of insert 160 from the inner surfaces of the walls of the vane. The lower section 170 has a plurality of impingement flow openings 174 such that the cooling medium flowing inwardly along the lower section 170 of insert 160 passes through openings 174 for impingement cooling against the interior surfaces of vane 32 between the ribs 172. As best illustrated in Figure 7, ribs 172 do not extend wholly about the interior of cavity 94. Rather, ribs 172 extend about the interior surfaces of the exterior walls of the cavity and terminate at 180 adjacent the interior dividing wall 181 between the cavities. Additionally, insert section 170 is recessed to define a channel 182 in communication with each of the gaps 184 formed between the insert section 170 and the interior wall of the vane. As illustrated in Figure 6, the bottom of the flow passage within insert section 170 is closed whereby the cooling medium flowing in channel 182 is directed through the openings 126a and 126b (Figures 5 and 5A) into the inner chambers 122a and 122b of the inner side wall 36.

Referring to Figure 7, a similar type of insert 191 is provided in vane cavity 98. As illustrated, the peripheral outline of insert 191 follows the contour of the shape of cavity 98 and has a plurality of radially spaced inwardly directed structural ribs 190 which terminate at ends 192 and define gaps between insert 191 and the interior wall of cavity 98. A channel 194 is formed in and along the forward side of the insert. The insert has impingement openings whereby cooling medium directed into the insert through openings 106 (Figure 3) flows outwardly through the impingement openings for impingement cooling of the outer walls of the vanes on opposite sides of the cavity 98. The post-impingement cooling medium then flows generally forwardly along ribs 190 into channel 194 for flow toward the inner side wall 36.

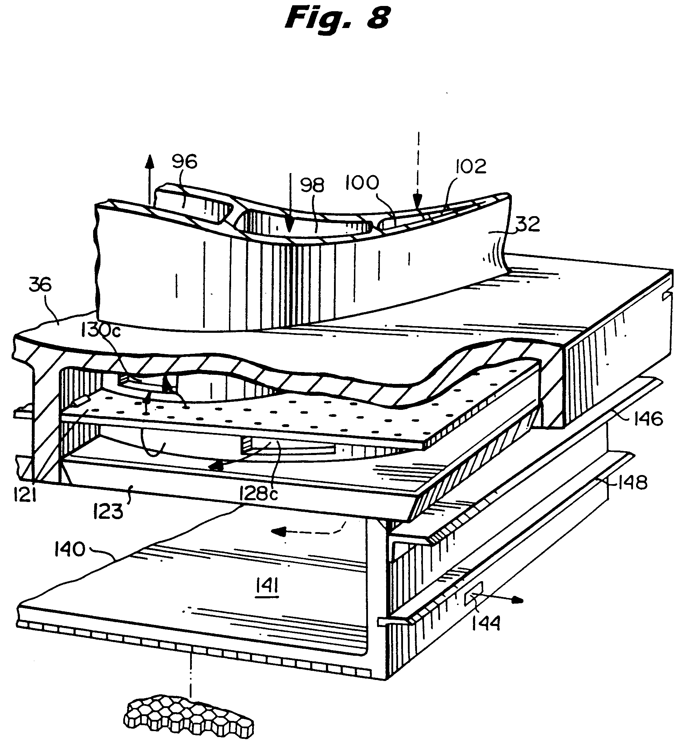

Referring to Figures 5A and 8, the post-impingement cooling medium from cavity 98 flows through openings 128c, 128d into the inner chambers 122c, 122d, respectively, of the inner side wall 36 for flow through the perforations of the impingement plates 121 in compartments 120c, 120d for impingement cooling of the inner side wall 36 before returning through openings 130c, 130d, respectively, to intermediate cavity 96. Intermediate cavity 96 similarly has a double insert 210 having a plurality of perforations or openings 212. Ribs 214 spaced radially along the walls of cavity 96 project inwardly toward insert 210 and terminate at opposite ends of the cavity to define a pair of channels 216 at opposite ends of the cavity. The cooling medium thus flows radially outwardly within insert 210, through the impingement perforations for impingement cooling of the walls of the cavity 96 and into chambers 216 (Figure 7). The spent cooling medium then egresses chambers 216 of cavity 96 into plenum 50 for flow through discharge 52.

The operation of the cooling circuit will now be described. The cooling medium, preferably steam, is supplied to the cooling inlet 48. Referring to Figure 3, the cooling steam flows into the outer chambers 76 of the outer side wall 34 by way of openings 88, 72 and undercuts 70. The steam flows radially inwardly through the perforations in the impingement plates 74 for egress into the inner chambers 78 and impingement cooling of outer side wall 34. The post-impingement cooling steam flows through openings 104 and 106 for flow into the inserts 160 and 191 in the forward and intermediate cavities 94 and 98, respectively. The cooling steam flows through the impingement perforations in the inserts and into the gaps between the ribs 172, 190 along the interior surfaces defining the vane cavities for impingement cooling of those surfaces. The post-impingement steam then flows into the channels 182 and 194 along the interior walls of the cavities 94 and 98, respectively. The post-impingement steam from channels 182 and 194 then flows into the inner chambers 122a, 122b and 122c, 122d, respectively, of the inner side wall 36 by way of openings 126a, 126b and 128c, 128d. The steam reverses direction and flows outwardly through the perforations in the impingement plates 121 of compartments 120a, 120b, 120c and 120d into the outer chambers 124a, 124b, 124c and 124d of the inner side wall 36 for impingement cooling thereof. The post-impingement steam then flows through openings 130a, 130b, 130c and 130d in the vane and into the insert 210 in the intermediate cavity 96. The spent steam then flows through perforations 212 in the insert 210 for impingement cooling of the opposite side walls of the cavity 96 (Figure 7), the post-impingement steam flowing into the channels 216 for return to the plenum 50 for exhaust through discharge 52. It will thus be appreciated that a closed steam cooling circuit has been described.

Additionally, the air cooling circuit includes air input through inlets 54 into the cavities 100 and 102 for cooling the trailing edge of the vane. As illustrated in Figure 10, the cavities lie in communication one with the other by way of openings 230. The air exits into the plenum 140 of the diaphragm 30 for exit through openings 142 and 144 at the leading and trailing ends of the diaphragm and into the wheel cavities.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A stator vane segment for forming part of a stage of a turbine and connection with an inner shell of the turbine, comprising:
inner and outer walls spaced from one another;
a stator vane extending between said inner and outer walls and having leading and trailing edges, said vane including a plurality of discrete cavities between the leading and trailing edges and extending lengthwise of said vane for flowing a cooling medium; and
a hook connected to said vane and projecting outwardly of said outer wall for supporting said stator vane from the inner turbine shell, said inner and outer walls, said vane and said hook being formed of an integral casting.

2. A stator vane segment according to Claim 1 wherein said outer wall has a pair of ribs along an outer surface thereof defining a pair of compartments outwardly of said outer surface for receiving the cooling medium and forming structural connections with said vane;
said inner wall having at least one rib along an inner surface thereof defining a pair of compartments inwardly of said inner surface for receiving the cooling medium and forming a structural connection with said vane;
said vane having a first opening through a side wall thereof in communication with at least one compartment of said outer wall and one of said cavities to enable passage of the cooling medium between said one compartment and said one cavity;
said vane having a second opening through a side wall thereof in communication with at least one compartment of said inner wall and said one cavity to enable passage of the cooling medium between said one cavity and said one compartment of said inner wall.

3. A stator vane segment according to Claim 1 wherein said outer wall has a plurality of ribs along an outer surface thereof defining a plurality of compartments outwardly of said outer surface for receiving a cooling medium and forming structural connections with said vane;
a cover for said compartments of said outer wall, impingement plates in said compartments between said cover and said outer surface defining outer and inner chambers on opposite sides of said impingement plates and in said outer wall compartments, a cooling medium inlet for said segment, said ribs having openings enabling passage of the cooling medium from said inlet into said outer chambers of said compartments, said impingement plates having openings enabling passage of the cooling medium from said outer chambers into said inner chambers for impingement cooling of said outer wall;
said vane having a first opening through a side wall thereof in communication with at least one of said inner chambers and one of said cavities to enable passage of the cooling medium between said inner chamber and said one cavity.

4. A stator vane segment according to Claim 1 wherein said inner wall has at least one rib along an inner surface thereof defining a pair of compartments inwardly of said inner surface for receiving the cooling medium and forming a structural connection with said vane;
a cover for one of said compartments along said inner wall, an impingement plate in said one compartment between said cover and said inner surface defining inner and outer chambers on opposite sides thereof, said vane having an opening through a side wall thereof in communication with said inner chamber and one of said cavities to enable passage of the cooling medium between said one cavity and said inner chamber, said impingement plate in said one compartment having openings enabling passage of the cooling medium from said inner chamber into said outer chamber of said inner wall for impingement cooling of said inner wall.

5. A turbine vane segment, comprising:
inner and outer walls spaced from one another;
a vane extending between said inner and outer walls and having leading and trailing edges, said vane including a plurality of discrete cavities between the leading and trailing edges and extending lengthwise of said vane for flowing a cooling medium;
said outer wall having a plurality of ribs along an outer surface thereof defining a plurality of compartments outwardly of said outer surface for receiving the cooling medium and forming structural connections with said vane;
a cover for each said compartment, impingement plates in said compartments between-said covers and said outer surface defining outer and inner chambers on opposite sides of said impingement plates and in said compartments, a cooling medium inlet for said segment, said ribs having openings for enabling passage of the cooling medium from said inlet into said outer chambers of said compartments, said impingement plates having openings enabling passage of the cooling medium from said outer chambers into said inner chambers for impingement cooling of said outer wall;
said vane having a first opening through a side wall thereof in communication with at least one compartment of said outer wall and one of said cavities to enable passage of the cooling medium between said one compartment and said one cavity.

6. A turbine vane segment according to Claim 5 wherein said inner wall has at least one rib along an inner surface thereof defining a pair of compartments inwardly of said inner surface for receiving the cooling medium and forming a structural connection with said vane;
a cover for one of said compartments along said inner wall, an impingement plate in said one compartment between said cover and said inner surface defining inner and outer chambers on opposite sides thereof, said vane having a second opening through a side wall thereof in communication with said inner chamber of said inner wall and one of said cavities to enable passage of the cooling medium between said one cavity and said inner chamber, said impingement plate in said one compartment having openings enabling passage of the cooling medium from said inner chamber into said outer chamber of said inner wall for impingement cooling of said inner wall.

7. A turbine vane segment according to Claim 5 wherein at least one cavity of said vane has a plurality of ribs projecting inwardly of an inner wall surface of said vane at spaced locations along the length of said vane, an insert sleeve within said one cavity and engaging said ribs defining discrete gaps between said insert sleeve and the inner wall of said vane at spaced locations along said vane, said insert sleeve having an inlet for flowing the cooling medium into said insert sleeve, said insert sleeve having a plurality of openings therethrough for flowing the cooling medium through said sleeve openings into said gaps for impingement against an inner wall surface of said vane, said insert sleeve and said inner wall surface of said vane defining a channel therebetween along a side wall of said vane in communication with said gaps for receiving the cooling medium flowing into said gaps.

8. A stator vane segment for forming part of a stage of a turbine, comprising:
inner and outer walls spaced from one another;
a stator vane extending between said inner and outer walls and having leading and trailing edges, said vane including a plurality of discrete cavities between the leading and trailing edges and extending lengthwise of said vane for flowing a cooling medium;
said inner wall having a plurality of ribs along an inner surface thereof defining a plurality of compartments inwardly of said inner surface for receiving the cooling medium and forming structural connections with said vane;
a cover for one of said compartments, an impingement plate in said one compartment between said cover and said inner surface defining inner and outer chambers on opposite sides of said impingement plate and in said one compartment, said vane having an opening through a side wall thereof in communication with said inner chamber and one of said cavities for flowing the cooling medium between said one cavity and said inner chamber, said impingement plate having openings enabling passage of the cooling medium from said inner chamber into said outer chamber for impingement cooling of said inner wall.

9. A stator vane segment according to Claim 8 wherein said one cavity of said vane has a plurality of ribs projecting inwardly of an inner wall surface thereof at generally radially spaced locations along the length of said vane, an insert sleeve within said one cavity and engaging said ribs defining discrete gaps between said insert sleeve and the inner wall of said vane at spaced locations along said vane, said insert sleeve having an inlet for flowing the cooling medium into said insert sleeve, said insert sleeve having a plurality of openings therethrough for flowing the cooling medium through said sleeve openings into said gaps for impingement against said inner wall surface of said vane, said insert sleeve and said inner wall surface of said vane defining a channel therebetween along a side wall of said vane in communication with said gaps for receiving the cooling medium flowing into said gaps.

10. A stator vane segment according to Claim 8 including an air inlet for said segment through said outer wall, another of said cavities of said vane lying in communication with said air inlet for air cooling walls of said vane surrounding said another cavity, an outlet inwardly of said inner wall in communication with said another cavity for exhausting spent cooling air externally of the turbine stage.
